# EUROPÄISCHE PATENTSCHRIFT

(11) **EP 2 217 747 B1**
(45) Veröffentlichungstag und Bekanntmachung des Hinweises auf die Patenterteilung: **09.01.2013**
(21) Anmeldenummer: 08854627.0
(22) Anmeldetag: 26.11.2008
(51) Int. Cl.: D03D 15/00

(54) **TEXTILGEWEBE UND GEWEBESTÜCK FÜR FAHRZEUGSITZE SOWIE FAHRZEUGSITZ**
TEXTILE FABRIC AND FABRIC CUT FOR VEHICLE SEATS AND VEHICLE SEAT
TISSU TEXTILE ET PIÈCE DE TISSU POUR SIÈGES DE VÉHICULE ET SIÈGE DE VÉHICULE

(30) Priorität: 28.11.2007 DE 102007057739
(43) Veröffentlichungstag der Anmeldung: 18.08.2010
(73) Patentinhaber: Volkswagen Aktiengesellschaft, 38440 Wolfsburg (DE)
(72) Erfinder: MÜLLER, Claudia, 38112 Braunschweig (DE); ROHLFING, Hans, 38108 Braunschweig (DE); HAMADER, Gerson, 38226 Salzgitter (DE); DEUTMEYER, Christian, 46397 Bocholt (DE); MENSING, Olaf, 48619 Heek (DE)
(86) Internationale Anmeldenummer: PCT/EP2008/010017
(87) Internationale Veröffentlichungsnummer: WO 2009/068257

(56) Entgegenhaltungen:
- EP-A- 1 254 980
- JP-A- 2004 100 076
- US-A- 3 443 541
- US-A1- 2006 016 507

## Beschreibung

Die Erfindung betrifft ein Textilgewebe mit besonders robusten Eigenschaften, insbesondere für die Verwendung zur äußeren Auskleidung von Fahrzeugsitzen, mit den im Oberbegriff des Anspruchs 1 genannten Merkmalen, ein zugeschnittenes Gewebestück mit den im Oberbegriff des Anspruchs 11 genannten Merkmalen, sowie einen Fahrzeugsitz mit den im Oberbegriff des Anspruchs 13 genannten Merkmalen.

Es ist bekannt, dass die äußere Auskleidung von Fahrzeugsitzen mit Gewebestoff oder Leder darauf gerichtet ist, optisch ansprechend und zugleich möglichst langlebig und strapazierfähig zu sein. Besonders die Gewebestoffe haben sich hierzu als preiswertere Anwendungen mit besseren Alltagseigenschaften gegenüber dem natürlichen Leder erwiesen. Professionelle Benutzer von Fahrzeugen wie zum Beispiel Postzusteller, beanspruchen einen Fahrzeugsitz etwa 350-mal pro Tag an 250 Tagen pro Jahr. Bei solchen Beanspruchungen zeigt jeder verfügbarer Sitz-Textilstoff schon nach wenigen Monaten beziehungsweise 1000 bis 20000 km Laufleistung Verschleißmängel wie haariger Faserpelz und Pilling (Knötchenbildung durch Fuseln oder Flusen) bis zum Aufreißen des Bezuges und Entstehen von Löchern im Bezug. Die Anforderungen, über einen Lebenszyklus eines Fahrzeugs hinweg Ein- und Ausstiegsvorgänge ohne sichtbaren Verschleiß zu überstehen, erfüllt derzeit kein bekannter Gewebestoff für Fahrzeugsitze. Dabei können Besonderheiten der Bekleidung der Benutzer, beispielsweise berufsbedingte Klettverschlüsse, Metallschnellverschlüsse und Ähnliches, zu einer besonderen zusätzlichen Beanspruchung eines Sitzstoffes führen.

Die Gewebestoffe werden prinzipiell im Wesentlichen entlang aufgespannter, sogenannter Kettgarne durch quer dazu eingewebte, sogenannte Schussgarne auf hochautomatisierten Webmaschinen gewebt. Die verwendeten Fäden oder Garne werden, wenn sie endlos möglich sind, Filamente genannt, welche dann unterscheidend Monofilamente genannt sind, wenn sie aus nur einem Faden bestehen und Multifilamente, wenn sie aus mehreren Fäden bestehen. Man spricht in diesem Zusammenhang auch von einer Filamentenanzahl. Der endlose Faden entsteht beispielsweise durch eine einzelne chemisch hergestellte Faser oder einer Vielzahl von versponnenen Spinnfasern wie es bei einem Seidenfaden möglich ist. Weil die Ermittlung des Querschnitts eines versponnenen Fadens infolge der verschiedenen Dichten der Verzwirnung einer Vielzahl von Fasern äußerst schwierig ist, hat man ein sogenanntes Nummerierungsverfahren festgelegt, mit dem die Fadenlänge und Fadenmasse in eine Beziehung zueinander gesetzt werden, die als eine genormt ermittelte Feinheitsangabe in tex-Nummern heran gezogen wird. Viele weitere Parameter der Faser bestimmen die Eigenschaften gewebter Stoffe, ebenso wie die Parameter des verwendeten Webverfahrens, beziehungsweise der Gewebekonstruktion. Insbesondere die Art der Bindungsbildung zwischen Kett- und Schussgarn bestimmt die Festigkeit eines gewebten Stoffes. Bei der Webart Leinwand (L) ist jeder Kreuzungspunkt der Kett- und Schussfäden auch ein Bindungspunkt und die Webart Köper (K) weist eine Bindung erst nach wenigstens 2 Kett- oder Schussfäden auf. Die so entstehenden mehrfachen Fadenübergreifungen nennt man Flottierungen. Die Köperbildung erkennt man an parallelen Linien, die schräg zur Kettfadenrichtung verlaufen. Diese Linien treten je nach Gewebeart mehr oder weniger deutlich hervor und werden oft als Bindungslinien, Diagonalen oder Grate genannt. Die Grate entstehen durch die Flottierungen, wobei wenn die Flottierungen nach rechts versetzt sind, die Grate von links nach rechts verlaufen und vice versa. Weil die schräge Linie einmal wie der Schrägstrich des Buchstabens Z geneigt und im anderen wie beim Buchstaben S geneigt sein kann, spricht man von einem Z-Grat-Körper und einem S-Grat-Körper.

Das als Faden der Kett- und Schussgarne verwendete Material spielt eine Schlüsselrolle für das Erreichen bestimmter mechanischer oder chemischer Eigenschaften eines Gewebestoffes. Als Beispiel kommen Kunstfasern aus Polyester (PES) als eine von vielen Alternativen zum Einsatz. ("PES" ist die international übliche generische Abkürzung für "Polyester".)

Ein Gewebe gemäß dem Oberbegriff des Ansprüchs 1 ist aus JP-A- 2004 100076 bekannt.

Der Erfindung liegt die Aufgabe zugrunde, einen strapazierfähigen Gewebestoff vorzuschlagen, der speziell bei der Anwendung zur äußeren Auskleidung von Fahrzeugsitzen eine deutlich verlängerte Nutzungsdauer ohne sichtbare Verschleißerscheinungen aufweist. Ferner soll die Aufgabe auf eine wirtschaftlich vorteilhafte Weise durch Anpassen der Parameter der verwendeten Faser, Garne, der Gewebekonstruktion und der Gewebeausrüstung gelöst sein.

Dadurch, dass bei einem Textilgewebe für die äußere Auskleidung von Fahrzeugsitzen, mit auf eine hohe Strapazierfähigkeit ausgelegten Parametereigenschaften der Kett- und/oder Schussfäden und der Gewebekonstruktion, der eine Faden als Kettfaden aus dem Material Polyester (PES) mit einem Elastizitätsanteil) als ein Monofilament ausgebildet ist und der andere Faden als Schussfaden (zum Beispiel aus dem Material PES Taslan lufttexturiert) als ein Multifilament ausgebildet ist, sind die gestellten Aufgaben der Erfindung erreicht.

In bevorzugter Ausgestaltung der Erfindung weist das erfindungsgemäße Textilgewebe derart aufeinander abgestimmte Parametereigenschaften auf, dass der Kettfaden eine Garnfeinheit von 675 dtex, die einem Durchmesser von 0,25 mm entspricht, eine Filamentanzahl von 1, eine Drehung von 0 T/m, eine Ketteinstellung von 32 F/cm, eine Festigkeit von 19,2 N = 27 cN/tex und eine Dehnung bei Bruch von 58 % aufweist.

In einer weiteren bevorzugten Ausgestaltung der Erfindung weist das erfindungsgemäße Textilgewebe derart aufeinander abgestimmte Parametereigenschaften auf, dass der Schussfaden eine mittlere Garnfeinheit von 570 dtex, eine Filamentanzahl von 132, eine Drehung von 0 T/m, eine Schusseinstellung von 12 F/cm, eine Festigkeit von größer/gleich 1083 cN und eine Dehnung bei Bruch von 35 % aufweist.

In einer weiteren bevorzugten Ausgestaltung der Erfindung ist das erfindungsgemäße Textilgewebe mit einer Köperbindung von K 2/2 (zwei oben zwei unten) mit Z-Grat oder S-Grat ausgebildet. Die durch Gratbildung vorgegebene Schrägstellung des Gewebes ist beim Zuschnitt durch Umdrehen der Richtung symmetrisch verwendbar, zum Beispiel für links und rechts angeordnete Gewebestücke.

In noch einer weiteren bevorzugten Ausgestaltung der Erfindung ist bei dem erfindungsgemäßen Textilgewebe die Elastizität des Materials des Kettfadens im Wesentlichen 20 %, vorzugsweise zwischen 10 und 25 %. Die Elastizität kann höher oder niedriger eingestellt sein und gewährleistet eine Dehnbarkeit des Gewebes, die eine Anpassung des Gewebes an äußere Gestaltform der Sitzpolsterung erleichtert.

In noch einer weiteren bevorzugten Ausgestaltung der Erfindung ist der Schussfaden und der Kettfaden jeweils in einer beliebigen Farbe oder Farbenzusammensetzung ausgeführt. Vorzugsweise weist das für den Kettfaden verwendete PES-Material ein 100 % PES-Material und das für den Schussfaden verwendete PES-Material ein 100 % PES Taslan lufttexturiert auf.

In einer noch weiteren bevorzugten Ausgestaltung der Erfindung weist der Schussfaden eine mittlere Garnfeinheit von 570 dtex mit einer Abweichung von maximal plus/minus 5 % auf.

Vorzugsweise kann das Material des Schussfadens eine Zähigkeit von größer als 2 cN/dtex aufweisen.

Nach einem weiteren Aspekt der vorliegenden Erfindung ist ein auf Fertigungsmaß zugeschnittenes Gewebestück zur Herstellung äußerer Auskleidung von Fahrzeugsitzen, das aus einem Gewebe mit auf eine hohe Strapazierfähigkeit ausgelegten Parametereigenschaften der Kett- und/oder Schussfäden und der Gewebekonstruktion hergestellt ist, aus einem Gewebe hergestellt, bei dem der Kettfaden mit dem Material Polyester (PES) mit einer vorgegebenen Elastizität als ein Monofilament ausgebildet ist, der Schussfaden mit dem Material Polyester (PES) (Taslan lufttexturiert) als ein Multifilament ausgebildet ist.

Das erfindungsgemäße Gewebestück ist in einer bevorzugten Ausgestaltung aus einem Gewebe hergestellt, bei dem der Kettfaden eine Garnfeinheit von 675 dtex, die einem Durchmesser von 0,25 mm entspricht, eine Filamentanzahl von 1, eine Drehung von 0 T/m, eine Ketteinstellung von 32 F/cm, eine Festigkeit von 19,2 N = 27 cN/tex und eine Dehnung bei Bruch von 58 % aufweist.

In einer weiteren Ausführung vorliegender Erfindung ist das erfindungsgemäße Gewebestück aus einem Gewebe hergestellt, bei dem der Schussfaden eine mittlere Garnfeinheit von 570 dtex, eine Filamentanzahl von 132, eine Drehung von 0 T/m, eine Schusseinstellung von 12 F/cm, eine Festigkeit von größer/gleich 1083 cN und eine Dehnung bei Bruch von 35 % aufweist.

In einer weiteren Ausführung vorliegender Erfindung ist das erfindungsgemäße Gewebestück aus einem Gewebe hergestellt, bei dem die Köperbindung mit Z-Grat oder S-Grat ausgebildet ist. Bei dem Verwenden des Gewebestoffes zum Anfertigen von auf Fertigungsmaß zugeschnittenen Gewebestücken kann der Stoff mit Z-Grat oder dem S-Grat umgedreht werden.

In einer weiteren Ausführung vorliegender Erfindung ist das erfindungsgemäße Gewebestück aus einem Gewebe hergestellt, bei dem die Elastizität des Materials des Kettfadens im Wesentlichen 20 % ist und in einem Bereich zwischen 10 und 25 % vorgebbar ist.

In noch einer weiteren Ausführung vorliegender Erfindung ist das erfindungsgemäße Gewebestück aus einem Gewebe hergestellt, bei dem der Schussfaden und der Kettfaden jeweils in einer beliebigen Farbe oder Farbenzusammensetzung ausgeführt ist.

In einer weiteren bevorzugten Ausführung vorliegender Erfindung ist das erfindungsgemäße Gewebestück aus einem Gewebe hergestellt, bei dem das für den Kettfaden verwendete PES-Material ein 100 % PES-Material aufweist.

In immer noch einer weiteren Ausführung vorliegender Erfindung ist das erfindungsgemäße Gewebestück aus einem Gewebe hergestellt, bei dem das für den Schussfaden verwendete PES-Material ein 100 % PES Taslan lufttexturiert Material aufweist.

In einer weiteren Ausführung vorliegender Erfindung ist das erfindungsgemäße Gewebestück aus einem Gewebe hergestellt, bei dem der Schussfaden eine mittlere Garnfeinheit von 570 dtex mit einer Abweichung von maximal plus/minus 5 % aufweist.

Und in noch einer weiteren Ausführung vorliegender Erfindung ist das erfindungsgemäße Gewebestück aus einem Gewebe hergestellt, bei dem das Material des Schussfadens eine Zähigkeit von größer als 2 cN/dtex aufweist.

Als ein auf dem Markt erhältliches PES-Garn ist vorzugsweise das Produkt RADYARN 540/132 Black AJ 130° der Fa. RADICI Group, Italien verwendet.

Nach einem weiteren Aspekt der vorliegenden Erfindung ist ein Fahrzeugsitz außen vollständig oder teilweise mit einem Textilgewebe ausgekleidet. Das Textilgewebe besitzt auf eine hohe Strapazierfähigkeit ausgelegte Parametereigenschaften der Kett- und/oder Schussfäden und der Gewebekonstruktion. Der Kettfaden ist mit dem Material Polyester (PES) als ein Monofilament ausgebildet; der Schussfaden ist mit dem Material Polyester (PES) als ein Taslan-lufttexturiertes Multifilament ausgebidet. Das Textilgewebe kann in verschiedenen bevorzugten Ausführungen und Varianten ausgebildet sein, wie oben angegeben.

Weitere bevorzugte Ausgestaltungen der Erfindung ergeben sich aus den übrigen, in den Unteransprüchen genannten Merkmalen.

## Patentansprüche

1. Textilgewebe für die äußere Auskleidung von Fahrzeugsitzen, mit auf eine hohe Strapazierfähigkeit ausgelegten Parametereigenschaften der Kett- und/oder Schussfäden und der Gewebekonstruktion, wobei
der Kettfaden mit dem Material Polyester (PES) als ein Monofilament und der Schussfaden mit dem Material Polyester (PES) als ein Multifilament ausgebildet ist, **dadurch gekennzeichnet, dass** der Schussfaden mit dem Material Polyester (PES) als ein - Taslan - lufttexturiertes Multifilament ausgebildet ist.

2. Textilgewebe nach Anspruch 1,
**dadurch gekennzeichnet, dass**
der Kettfaden eine Garnfeinheit von 675 dtex, die einem Durchmesser von 0,25 mm entspricht, eine Filamentanzahl von 1, eine Drehung von 0 T/m, eine Ketteinstellung von 32 F/cm, eine Festigkeit von 19,2 N = 27 cN/tex und eine Dehnung bei Bruch von wenigstens 58 % aufweist.

3. Textilgewebe nach einem der vorhergehenden Ansprüche,
**dadurch gekennzeichnet, dass**
der Schussfaden eine mittlere Garnfeinheit von 570 dtex, eine Filamentanzahl von 132, eine Drehung von 0 T/m, eine Schusseinstellung von 12 F/cm, eine Festigkeit von größer/gleich 1083 cN und eine Dehnung bei Bruch von 35 % aufweist.

4. Textilgewebe nach einem der vorhergehenden Ansprüche,
**dadurch gekennzeichnet, dass**
die Köperbindung mit Z-Grat oder S-Grat ausgebildet ist.

5. Textilgewebe nach einem der vorhergehenden Ansprüche,
**dadurch gekennzeichnet, dass**
die Elastizität des Materials des Kettfadens im Wesentlichen 20 % ist und in einem Bereich zwischen 10 % und 25 % vorgebbar ist.

6. Textilgewebe nach einem der vorhergehenden Ansprüche,
**dadurch gekennzeichnet, dass**
das für den Kettfaden verwendete PES-Material ein 100 %-ges PES aufweist.

7. Textilgewebe nach einem der vorhergehenden Ansprüche,
**dadurch gekennzeichnet, dass**
das für den Schussfaden verwendete PES-Material ein 100 % PES Taslan lufttexturiert aufweist.

8. Textilgewebe nach einem der vorhergehenden Ansprüche,
**dadurch gekennzeichnet, dass**
der Schussfaden eine mittlere Garnfeinheit von 570 dtex mit einer Abweichung von maximal plus/minus 5 % aufweist.

9. Textilgewebe nach einem der vorhergehenden Ansprüche,
**dadurch gekennzeichnet, dass**
das Material des Schussfadens eine Zähigkeit von größer als 2 cN/dtex aufweist.

10. Textilgewebe nach Anspruch 1
**dadurch gekennzeichnet, dass**
der Kettfaden mit dem Material PES mit einer vorgegebenen Elastizität als ein Monofilament ausgebildet ist.

11. Textilgewebe nach Anspruch 1,
**dadurch gekennzeichnet, dass**
der Kettfaden und der Schussfaden als eine Köper-Bindung von K 2/2 (zwei oben zwei unten) ausgebildet ist.

12. Auf Fertigungsmaß zugeschnittenes Gewebestück zur Herstellung äußerer Auskleidung von Fahrzeugsitzen, hergestellt aus einem Gewebe mit auf eine hohe Strapazierfähigkeit ausgelegten Parametereigenschaften der Kett- und/oder Schussfäden und der Gewebekonstruktion, wobei der Kettfaden mit dem Material Polyester (PES) als ein Monofilament ausgebildet ist und der Schussfaden mit dem Material Polyester (PES) als ein Multifilament ausgebildet ist, **dadurch gekennzeichnet, dass** der Schussfaden mit dem Polyester (PES) als ein-Taslan- lufttexturiertes Multifilament ausgebildet ist.

13. Gewebestück nach Anspruch 12,
**dadurch gekennzeichnet, dass**
das Gewebe des Gewebestücks nach einem oder mehreren der Ansprüche 2 bis 11 ausgebildet ist.

14. Fahrzeugsitz, der außen zumindest teilweise mit einem Textilgewebe ausgekleidet ist, mit auf eine hohe Strapazierfähigkeit ausgelegten Parametereigenschaften der Kett- und/oder Schussfäden und der Gewebekonstruktion des Textilgewebes, wobei
der Kettfaden mit dem Material Polyester (PES) als ein Monofilament und der Schussfaden mit dem Material Polyester (PES) als ein
Multifilament ausgebildet ist, **dadurch gekennzeichnet, dass** der Schussfaden mit dem Polyester (PES) als ein -Taslan- lufttexturiertes Multifilament ausgebildet ist.

15. Fahrzeugsitz nach Anspruch 14,
**dadurch gekennzeichnet, dass**
das Textilgewebe des Fahrzeugsitzes nach einem oder mehreren der Ansprüche 2 bis 11 ausgebildet ist.

## Claims

1. Textile fabric for the external lining of vehicle seats, having parameter characteristics, configured for high durability, of the warp and/or weft threads and the fabric structure, wherein the warp thread is formed as a monofilament with the material polyester (PES) and the weft thread is formed as a multifilament with the material polyester (PES), **characterized in that** the weft thread is formed as a - Taslan - air-textured multifilament with the material polyester (PES).

2. Textile fabric according to Claim 1, **characterized in that** the warp thread has a yarn fineness of 675 dtex, which corresponds to a diameter of 0.25 mm, a filament number of 1, a twist of 0 T/m, a warp density of 32 F/cm, a strength of 19.2 N = 27 cN/tex and an elongation at break of at least 58%.

3. Textile fabric according to either of the preceding claims, **characterized in that** the weft thread has an average yarn fineness of 570 dtex, a filament number of 132, a twist of 0 T/m, a weft density of 12 F/cm, a strength of greater than/equal to 1083 cN and an elongation at break of 35%.

4. Textile fabric according to one of the preceding claims, **characterized in that** the twill weave is formed with a Z twill or S twill.

5. Textile fabric according to one of the preceding claims, **characterized in that** the elasticity of the material of the warp thread is essentially 20% and is predeterminable in a range between 10% and 25%.

6. Textile fabric according to one of the preceding claims, **characterized in that** the PES material used for the warp threads has 100% PES.

7. Textile fabric according to one of the preceding claims, **characterized in that** the PES material used for the weft threads has 100% PES which is Taslan air-textured.

8. Textile fabric according to one of the preceding claims, **characterized in that** the weft thread has an average yarn fineness of 570 dtex with a deviation of at most plus/minus 5%.

9. Textile fabric according to one of the preceding claims, **characterized in that** the material of the weft thread has a tenacity of greater than 2 cN/dtex.

10. Textile fabric according to Claim 1, **characterized in that** the warp thread is formed as a monofilament with the material PES having a predetermined elasticity.

11. Textile fabric according to Claim 1, **characterized in that** the warp thread and the weft thread are formed as a twill weave of K 2/2 (two above, two below).

12. Fabric piece cut to manufacturing dimensions for producing an external lining of vehicle seats, produced from a fabric having parameter characteristics, configured for high durability, of the warp and/or weft threads and the fabric structure, wherein the warp thread is formed as a monofilament with the material polyester (PES) and the weft thread is formed as a multifilament with the material polyester (PES), **characterized in that** the weft thread is formed as a - Taslan - air-textured multifilament with the polyester (PES).

13. Fabric piece according to Claim 12, **characterized in that** the fabric of the fabric piece is formed according to one or more of Claims 2 to 11.

14. Vehicle seat which is lined externally at least partially with a textile fabric, having parameter characteristics, configured for high durability, of the warp and/or weft threads and the fabric structure of the textile fabric, wherein the warp thread is formed as a monofilament with the material polyester (PES) and the weft thread is formed as a multifilament with the material polyester (PES), **characterized in that** the weft thread is formed as a - Taslan - air-textured multifilament with the polyester (PES).

15. Vehicle seat according to Claim 14, **characterized in that** the textile fabric of the vehicle seat is formed according to one or more of Claims 2 to 11.

## Revendications

1. Tissu textile pour l'habillage extérieur de sièges de véhicule, avec des propriétés paramétriques des fils de chaîne et/ou des fils de trame et de la structure du tissu conçues pour une résistance élevée, dans lequel le fil de chaîne est réalisé avec le matériau polyester (PES) sous la forme d'un monofilament et le fil de trame est réalisé avec le matériau polyester (PES) sous la forme d'un multifilament, **caractérisé en ce que** le fil de trame est réalisé avec le matériau polyester (PES) sous la forme d'un multifilament texturé à l'air Taslan.

2. Tissu textile selon la revendication 1, **caractérisé en ce que** le fil de chaîne présente une finesse de fil de 675 dtex, qui correspond à un diamètre de 0,25 mm, un nombre de filaments de 1, une torsion de 0 tr/m, un réglage de chaîne de 32 F/cm, une résistance de 19,2 N = 27 cN/tex, et un allongement à la rupture d'au moins 58 %.

3. Tissu textile selon l'une quelconque des revendications précédentes, **caractérisé en ce que** le fil de trame présente une finesse de fil moyenne de 570 dtex, un nombre de filaments de 132, une torsion de 0 tr/m, un réglage de trame de 12 F/cm, une résistance égale ou supérieure à 1083 cN et un allongement à la rupture de 35 %.

4. Tissu textile selon l'une quelconque des revendications précédentes, **caractérisé en ce que** l'armure croisée est réalisée avec sergé Z ou avec sergé S.

5. Tissu textile selon l'une quelconque des revendications précédentes, **caractérisé en ce que** l'élasticité du matériau du fil de chaîne vaut essentiellement 20 % et peut être fixée dans une plage comprise entre 10 % et 25 %.

6. Tissu textile selon l'une quelconque des revendications précédentes, **caractérisé en ce que** le matériau PES utilisé pour le fil de chaîne présente une teneur en PES de 100 %.

7. Tissu textile selon l'une quelconque des revendications précédentes, **caractérisé en ce que** le matériau PES utilisé pour le fil de trame présente un PES 100 % texturé à l'air Taslan.

8. Tissu textile selon l'une quelconque des revendications précédentes, **caractérisé en ce que** le fil de trame présente une finesse de fil moyenne de 570 dtex avec un écart maximal de ± 5 %.

9. Tissu textile selon l'une quelconque des revendications précédentes, **caractérisé en ce que** le matériau du fil de trame présente une solidité supérieure à 2 cN/dtex.

10. Tissu textile selon la revendication 1, **caractérisé en ce que** le fil de chaîne est réalisé sous la forme d'un monofilament avec le matériau PES ayant une élasticité prédéterminée.

11. Tissu textile selon la revendication 1, **caractérisé en ce que** le fil de chaîne et le fil de trame sont réalisés sous la forme d'une armure croisée de K 2/2 (deux au-dessus deux en dessous).

12. Pièce de tissu coupée à mesure pour la fabrication d'un habillage extérieur de sièges de véhicule, fabriquée en un tissu présentant des propriétés paramétriques des fils de chaîne et/ou des fils de trame et de la structure du tissu conçues pour une résistance élevée, dans laquelle le fil de chaîne est réalisé avec le matériau polyester (PES) sous la forme d'un monofilament et le fil de trame est réalisé avec le matériau polyester (PES) sous la forme d'un multifilament, **caractérisée en ce que** le fil de trame est réalisé avec le matériau polyester (PES) sous la forme d'un multifilament texturé à l'air Taslan.

13. Pièce de tissu selon la revendication 12, **caractérisée en ce que** le tissu de la pièce de tissu est réalisé selon une ou plusieurs des revendications 2 à 11.

14. Siège de véhicule, qui est habillé extérieurement au moins en partie avec un tissu textile présentant des propriétés paramétriques des fils de chaîne et/ou des fils de trame et de la structure du tissu conçues pour une résistance élevée, dans lequel le fil de chaîne est réalisé avec le matériau polyester (PES) sous la forme d'un monofilament et le fil de trame est réalisé avec le matériau polyester (PES) sous la forme d'un multifilament, **caractérisé en ce que** le fil de trame est réalisé avec le matériau polyester (PES) sous la forme d'un multifilament texturé à l'air Taslan.

15. Siège de véhicule selon la revendication 14, **caractérisé en ce que** le tissu textile du siège de véhicule est réalisé selon une ou plusieurs des revendications 2 à 11.
